(19)

**Europäisches Patentamt**
**European Patent Office**
**Office européen des brevets**

(11) **EP 3 766 294 B1**

(12) **EUROPEAN PATENT SPECIFICATION**

(45) Date of publication and mention
of the grant of the patent:
**27.08.2025 Bulletin 2025/35**

(21) Application number: **20785130.4**

(22) Date of filing: **27.03.2020**

(51) International Patent Classification (IPC):
**G08G 1/01** (2006.01)     **G08G 1/16** (2006.01)
**H04W 72/20** (2023.01)     **H04W 72/02** (2009.01)
**H04L 1/1867** (2023.01)    **H04L 1/1607** (2023.01)

(52) Cooperative Patent Classification (CPC):
**G08G 1/0112; G08G 1/163; G08G 1/164;**
**H04W 72/02; H04W 72/20;** H04L 1/1685;
H04L 1/1887; H04L 67/12; H04W 4/46; H04W 76/14

(86) International application number:
**PCT/IB2020/052940**

(87) International publication number:
**WO 2020/201959 (08.10.2020 Gazette 2020/41)**

(54) **CONTROLLING HYBRID AUTOMATIC REPEAT REQUEST FEEDBACK IN SIDELINK COMMUNICATIONS IN A WIRELESS COMMUNICATIONS NETWORK**

STEUERUNG VON HYBRID-AUTOMATIC-REPEAT-REQUEST-RÜCKKOPPLUNG IN SIDELINK-KOMMUNIKATIONEN IN EINEM DRAHTLOSKOMMUNIKATIONSNETZWERK

COMMANDE DE RÉTROACTION DE REQUÊTE DE RÉPÉTITION AUTOMATIQUE HYBRIDE DANS DES COMMUNICATIONS DE LIAISON LATÉRALE DANS UN RÉSEAU DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.03.2019 US 201962826233 P**

(43) Date of publication of application:
**20.01.2021 Bulletin 2021/03**

(73) Proprietor: **JRD Communication (Shenzhen) Ltd Shenzhen, Guangdong 518052 (CN)**

(72) Inventors:
• **LIU, Guang**
  **92700 Colombes (FR)**
• **CAYRON, Noam**
  **92700 Colombes (FR)**
• **KATRANARAS, Efstathios**
  **92700 Colombes (FR)**
• **VIVIER, Guillaume**
  **92700 Colombes (FR)**
• **ASSOULINE, Benny**
  **92700 Colombes (FR)**

(74) Representative: **Simmons & Simmons**
**City Point**
**One Ropemaker Street**
**London EC2Y 9SS (GB)**

(56) References cited:
**WO-A1-2017/127245**

• **QUALCOMM INCORPORATED: "Physical layer procedures for HARQ operation for groupcast and unicast transmissions", vol. RAN WG1, no. Spokane, USA; 20181112 - 20181116, 11 November 2018 (2018-11-11), XP051555461, Retrieved from the Internet <URL:http://www.3gpp.org/ftp/Meetings%5F3GPP%5FSYNC/RAN1/Docs/R1%2D1813422%2Ezip> [retrieved on 20181111]**
• **MEDIATEK INC: "Discussion on physical layer procedure", vol. RAN WG1, no. Taipei; 20190121 - 20190125, 20 January 2019 (2019-01-20), XP051593121, Retrieved from the Internet <URL:http://www.3gpp.org/ftp/Meetings%5F3GPP%5FSYNC/RAN1/Docs/R1%2D1900197%2Ezip> [retrieved on 20190120]**

- **QUALCOMM INCORPORATED: "Discussion on Groupcast for NR V2X", 3GPP DRAFT; R2-1817780, 16 November 2018 (2018-11-16), Spokane, United States, pages 1 - 6, XP051481670**
- **LG ELECTRONICS: "Discussion on physical layer procedure for NR V2X", 3GPP DRAFT; R1-1812842 , 16 November 2018 (2018-11-16), Spokane, USA, pages 1 - 6, XP051479088**

## Description

## Technical Field

The following disclosure relates to controlling hybrid automatic repeat request feedback in sidelink communications in a wireless communications network, more specifically a vehicle to everything wireless communication network. The invention is mainly targeting new radio vehicle to everything groupcast sidelink communications, but could also apply to new radio vehicle to everything unicast and broadcast scenarios and long term evolution vehicle to everything unicast and groupcast transmissions.

## Background

Wireless communication systems, such as the third-generation (3G) of mobile telephone standards and technology are well known. Such 3G standards and technology have been developed by the Third Generation Partnership Project (3GPP). The 3rd generation of wireless communications has generally been developed to support macro-cell mobile phone communications. Communication systems and networks have developed towards a broadband and mobile system.

In cellular wireless communication systems User Equipment (UE) is connected by a wireless link to a Radio Access Network (RAN). The RAN comprises a set of base stations which provide wireless links to the UEs located in cells covered by the base station, and an interface to a Core Network (CN) which provides overall network control. As will be appreciated the RAN and CN each conduct respective functions in relation to the overall network. For convenience the term cellular network will be used to refer to the combined RAN & CN, and it will be understood that the term is used to refer to the respective system for performing the disclosed function.

The 3rd Generation Partnership Project has developed the so-called Long Term Evolution (LTE) system, namely, an Evolved Universal Mobile Telecommunication System Territorial Radio Access Network, (E-UTRAN), for a mobile access network where one or more macro-cells are supported by a base station known as an eNodeB or eNB (evolved NodeB). More recently, LTE is evolving further towards the so-called 5G or New Radio (NR) systems where one or more cells are supported by a base station known as a gNB. NR is proposed to utilise an Orthogonal Frequency Division Multiplexed (OFDM) physical transmission format.

In wireless communications networks, in addition to Downlink (DL) and Uplink (UL) communications between a UE and a base station, a UE may further receive communications via one or more Sidelinks (SLs). In LTE, SLs enable communication between two or more nearby devices, such as two or more UEs, using E-UTRAN technology without the need for a base station. SLs provide various functions for end-to-end communication, such as distributed control and management among devices and direct communication with and without network coverage. SLs are used for several applications, such as proximity service (D2D), IoT, wearables and Vehicle to Everything (V2X) communications.

In NR, there is an on-going study of V2X. NR V2X will support advanced V2X services beyond those supported in LTE. The advanced V2X services will require an enhanced NR system and new NR SL to meet the stringent requirements of this application. The NR V2X system is expected to have a flexible design to support services with low latency and high reliability requirements.

To achieve the required reliability and latency in NR V2X, a Hybrid Automatic Repeat Request (HARQ) scheduling scheme is used for SL communications. For SL communications between a transmit UE and a receive UE, data is received by the receive UE on a Physical Sidelink Shared Channel (PSSCH) and Sidelink Control Information (SCI) is received on a Physical Sidelink Control Channel (PSCCH). For unicast SL communications, when SL HARQ feedback is enabled, when a receive UE successfully receives and decodes SCI and successfully receives the data, the receive UE will send a HARQ Acknowledgement (HARQ-ACK) feedback as part of Sidelink Feedback Control Information (SFCI) to the transmit UE via a Physical Sidelink Feedback Channel (PSFCH). When the receive UE successfully receives and decodes the SCI but does not successfully receive the data, the receive UE will send a HARQ Negative Acknowledgement (HARQ-NACK) feedback as part of SFCI to the transmit UE via the PSFCH. When the transmit UE receives a HARQ-NACK feedback, it will schedule a retransmission of the SCI and the data to the receive UE, in the same way as the initial transmission.

For groupcast SL communications of data between a transmit UE and a plurality of receive UEs, when SL HARQ feedback is enabled, two options are considered for further study. Option 1 comprises when a receive UE successfully receives and decodes SCI but does not successfully receive the data, the receive UE will send a HARQ-NACK feedback as part of SFCI to the transmit UE on a PSFCH. The receive UE transmits no other signal on the PSFCH otherwise. Option 2 comprises when a receive UE successfully receives and decodes SCI and successfully receives the data, the receive UE will send a HARQ-ACK feedback as part of SFCI to the transmit UE on a PSFCH, and when the receive UE successfully receives and decodes SCI but does not successfully receive the data, the receive UE will send a HARQ-NACK feedback as part of SFCI to the transmit UE on a PSFCH. In both options, when the transmit UE receives a HARQ-NACK feedback, it will schedule a retransmission of the SCI and the data to the receive UE, in the same way as the initial transmission.

In some cases it may not be beneficial to have SL HARQ feedback enabled. This is particularly the case for UEs belonging to a group, where possibly large feedback overhead in large groups and latency/throughput issues may occur, especially considering that a UE transmitting in groupcast will have to retransmit even if only one receive UE in the group does not successfully receive the initial data transmission and sends a HARQ-NACK feedback. In latency-critical use cases (e.g. collective perception of environment), the SL HARQ feedback operation might not meet the latency requirements. In heavily congested scenarios, enabling a SL HARQ feedback operation not only results in diminishing returns but also causes losses in some cases and can lead to reduced high overhead or reduced throughput. SL HARQ feedback may not be needed for groupcast communications when the group members frequently change or the group size is large and enabling the feedback operation can lead to unnecessary control overhead. A SL HARQ feedback control option should be in place.

Technical submission document R1-1813422 (XP051555461) discloses a proposal to configure HARO operation based on a distance between two communicating devices.

## Summary

The invention is defined in the appended claims in which there is required a method performed in a wireless communications network comprising at least one base station, at least one transmit user equipment, at least one receive user equipment and a sidelink between the transmit user equipment and the receive user equipment, the method comprising the steps of defining one or more geographical zones around the at least one receive user equipment as a critical communication area for the at least one receive user equipment, wherein the one or more geographical zones comprise a current geographical zone within which the receive user equipment resides and one or more projected geographical zones within which the receive user equipment is projected to reside within a number of milliseconds; using the sidelink to transmit information from the at least one transmit user equipment to the at least one receive user equipment through groupcast communication; using the transmitted information to establish a transmit user equipment locality; determining when the transmit user equipment locality coincides with the critical communication area of the at least one receive user equipment; and enabling hybrid automatic repeat request feedback from the receive user equipment if the transmit user equipment locality coincides with the critical communication area of the receive user equipment, wherein the critical communication area of the receive user equipment is defined using one or more network conditions that are used to place one or more constraints on the critical communication area for the receive UE, and the one or more constraints comprise:
a minimum size of the critical communication area.

A selection of optional features is set out in the dependent claims.

## Brief description of the drawings

Further details, aspects and embodiments of the invention will be described, by way of example only, with reference to the drawings. Elements in the figures are illustrated for simplicity and clarity and have not necessarily been drawn to scale. Like reference numerals have been included in the respective drawings to ease understanding.

Figure 1 shows a schematic diagram of a wireless communications network;

Figure 2 shows a schematic diagram of example zones used in LTE networks;

Figure 3 shows a schematic diagram of an example finer zone-map used for NR V2X networks;

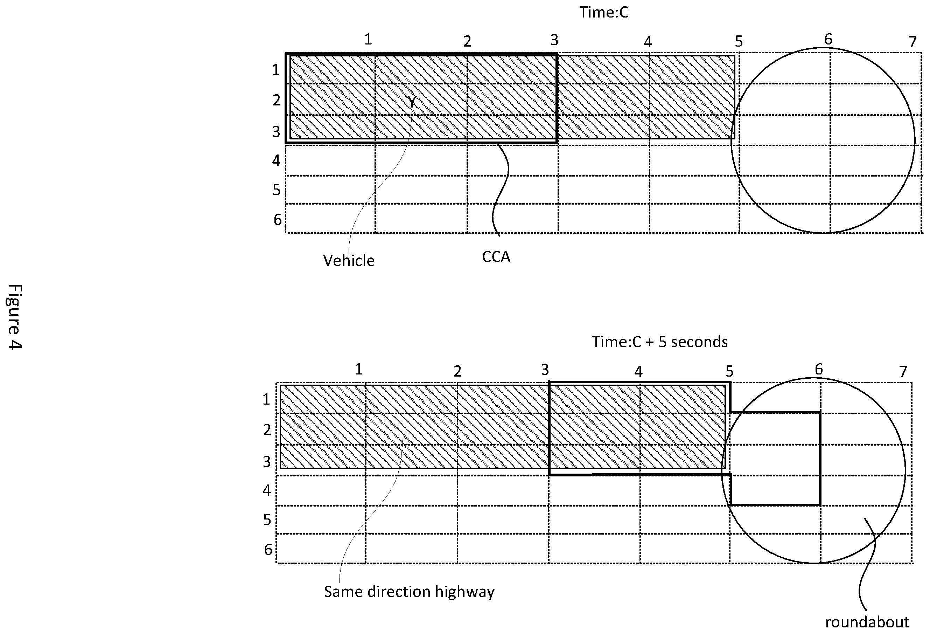

Figure 4 shows a schematic diagram of a critical communication area for a receive UE defined by a current geographical zone and one or more projected geographical zones;

Figure 5 shows a schematic diagram of an embodiment of the method of controlling HARQ feedback in SL communications between the transmit (Tx) UE and the receive (Rx) UE when the critical communication area for the receive UE is configured by the base station; and

Figure 6 shows a schematic diagram of further details of using the critical communication area for the receive (Rx) UE and the transmit user equipment locality established using information from the transmit (Tx) UE to determine whether or not the transmit UE is within the critical communication area of the receive UE and enable/disable HARQ feedback from the receive UE.

## Detailed description of the preferred embodiments

Those skilled in the art will recognise and appreciate that the specifics of the examples described are merely illustrative of some embodiments and that the teachings set forth herein are applicable in a variety of alternative settings.

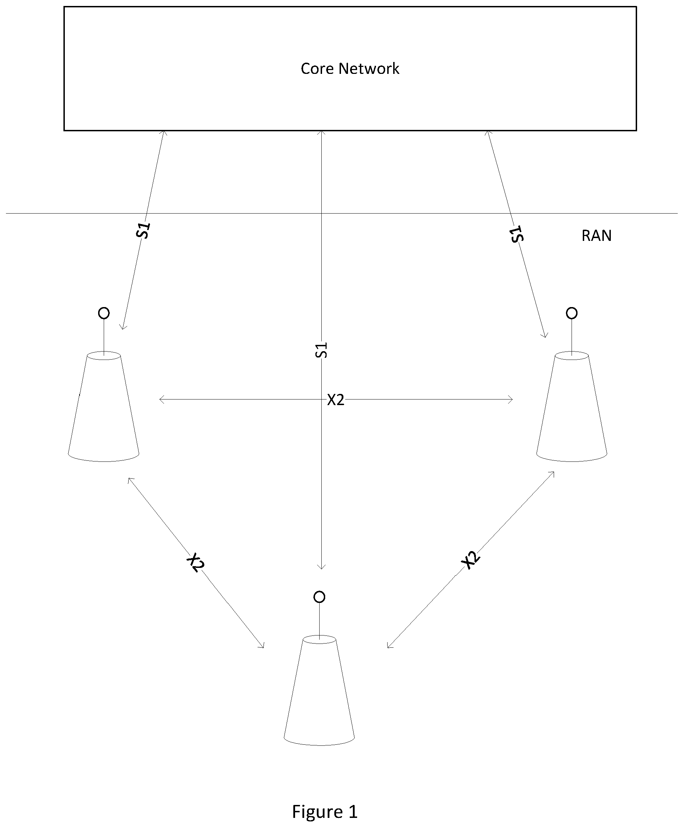

Figure 1 shows a schematic diagram of three base stations (for example, eNB or gNBs depending on the particular cellular standard and terminology) forming a cellular wireless communications network. Typically, each of the base stations will be deployed by one cellular network operator to provide geographic coverage for UEs in the area. The base stations form a Radio Area Network (RAN). Each base station provides wireless coverage for UEs in its area or cell. The base stations are interconnected via the X2 interface and are connected to the core network via the S1 interface. As will be appreciated only basic details are shown for the purposes of exemplifying the key features of a cellular network.

The base stations each comprise hardware and software to implement the RAN's functionality, including communications with the core network and other base stations, carriage of control and data signals between the core network and UEs, and maintaining wireless communications with UEs associated with each base station. The core network comprises hardware and software to implement the network functionality, such as overall network management and control, and routing of calls and data.

In addition to DL and UL communications between the UEs and a base station, UEs may further receive communications via one or more SLs. To achieve required reliability and latency in the network, a HARQ scheduling scheme is used for the SL communications.

A method is proposed in a wireless communications network comprising at least one base station, at least one transmit user equipment, at least one receive user equipment and a sidelink between the transmit user equipment and the receive user equipment, of controlling hybrid automatic repeat request feedback in sidelink communications between the transmit user equipment and the receive user equipment, the method comprising, defining a critical communication area for the receive user equipment, using one or more sidelink communications to transmit information from the transmit user equipment to the receive user equipment, using the information to establish a transmit user equipment locality, determining when the transmit user equipment locality coincides with the critical communication area of the receive user equipment and enabling hybrid automatic repeat request feedback from the receive user equipment and determining when the transmit user equipment locality does not coincide with the critical communication area of the receive user equipment and disabling hybrid automatic repeat request feedback from the receive user equipment.

A method is proposed in a wireless communications network comprising at least one base station, at least one transmit user equipment, at least one receive user equipment and a sidelink between the transmit user equipment and the receive user equipment, of controlling hybrid automatic repeat request feedback in sidelink communications between the transmit user equipment and the receive user equipment, the method comprising, defining a critical communication area for the receive user equipment, using one or more sidelink communications to transmit information from the transmit user equipment to the receive user equipment, using the information to establish a transmit user equipment locality, determining when the transmit user equipment locality does not coincide with the critical communication area of the receive user equipment and disabling hybrid automatic repeat request feedback from the receive user equipment.

The method comprises determining when the transmit UE locality is expected to coincide with the critical communication area of the receive UE and enabling HARQ feedback from the receive UE and determining when the transmit UE locality is not expected to coincide with the critical communication area of the receive UE and disabling HARQ feedback from the receive UE.

The method may comprise determining when the transmit UE locality is not expected to coincide with the critical communication area of the receive UE and disabling HARQ feedback from the receive UE.

The critical communication area for the receive UE is defined using one or more conditions. The one or more conditions comprise one or more network conditions. Additionally or alternatively, the one or more conditions may comprise one or more receive UE conditions.

The one or more network conditions may comprise any of use case of the network, network rules, message type received by the receive UE, receive UE network environment data, receive UE geographical environment data.

The one or more network conditions are used by the base station to define the critical communication area for the receive UE. The one or more network conditions are used by the base station to place one or more constraints on the critical communication area for the receive UE. The one or more constraints comprise a minimum size of the critical communication area. The one or more network conditions may be used by the base station to pre-define the critical communication area for the receive UE. The defined and/or pre-defined critical communication area for the receive UE may be sent from the base station to the receive UE via RRC.

The one or more network conditions are received by the receive UE from the base station and used by the receive UE to define the critical communication area for the receive UE.

The one or more receive UE conditions may comprise a current state of the receive UE. The current state of the receive UE may be determined using one or more of its current position, velocity, direction, yaw axis, acceleration.

The one or more receive UE conditions may comprise one or more parameters denoting an area around the receive UE. The area may be a circular area. The one or more parameters may comprise a Minimum Required Communication Range (MRCR) parameter. The MRCR parameter may comprise from 50 to 1000 meters and particularly less than 500m.

The one or more receive UE conditions may comprise a current state of the transmit UE. The current state of the transmit UE may be determined using one or more of its current position, velocity, direction, yaw axis, acceleration. The current state of the transmit UE may be part of the information transmitted by the transmit UE to the receive UE.

The one or more receive UE conditions may comprise relative movement of the receive UE with respect to the transmit UE.

The one or more receive UE conditions may comprise direction of movement of the transmit UE.

The receive UE conditions comprising the relative movement of the receive UE with respect to the transmit UE and the relative distance between the receive UE and the transmit UE may be calculated by the receive UE using the information transmitted by the transmit UE to the receive UE.

The one or more receive UE conditions may be used by the base station to define the critical communication area for the receive UE. The one or more receive UE conditions may be used by the base station to adjust a critical communication area for the receive UE defined using the one or more network conditions.

The one or more receive UE conditions may be used by the receive UE to define the critical communication area for the receive UE. The one or more receive UE conditions may be used by the receive UE to adjust a critical communication area for the receive UE defined using the one or more network conditions. Definition of the critical communication area by the receive UE may be essential in the case where the receive UE is out-of-coverage or when configuration by a base station may cause a lot of signalling with the base station. The receive UE may know of changes to its state in advance and can make quicker adjustments to the critical communication area.

The one or more conditions are used to define the critical communication area for the receive UE in terms of one or more geographical zones.

The one or more geographical zones comprise a current geographical zone within which the receive UE resides. The current geographical zone may be described by a current geographical zone identifier.

Additionally or alternatively, the one or more geographical zones comprise one or more projected geographical zones within which the receive UE may reside within a next X ms. The one or more geographical zones comprise a set of projected geographical zones within which the receive UE may reside within a next X ms. The one or more projected geographical zones and/or set of projected geographical zones may be described by one or more projected geographical zone identifiers.

The projected geographical zones may comprise one or more geographical zones around the receive UE current zone. The one or more geographical zones around the receive UE current zone may comprise a number of subzones in length (sub_Nx) and width (sub_Ny) of a zone map of the receive UE.

The projected geographical zones may be determined using a predicting method that takes into account the current state of the receive UE and outputs one or more predicted projected geographical zones. The current state of the receive UE may be determined using one or more of its current position, velocity, direction, yaw axis, acceleration. The one or more projected geographical zones may be extracted from the one or more predicted projected geographical zones according to a highest percentage probability of the receive UE being in a certain position.

The concept of zones and zone identifiers is used in **LTE** wireless communication networks to assign resource pools to multiple UEs in one given area. To reduce interference and resource collision among different transmitting UEs, UEs in different zones use their own zone specific resource pool.

The zones in LTE are specified according to the following:

$$x' = Floor\ (x\ /\ L)\ Mod\ Nx;$$

$$y' = Floor\ (y\ /\ W)\ Mod\ Ny;$$

$$Zone\_id = y'\ *\ Nx + x'$$

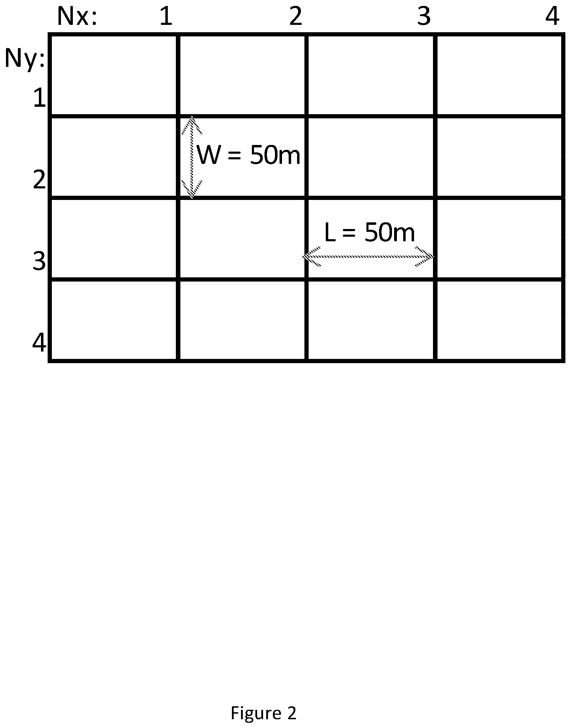

where x, y are the measured longitude and latitude of the UE's location respectively, L and W are the length and width of each zone (which can be: 5m, 10m, 20m, 50m, 100m, 200m, 500m), and Nx and Ny are the number of zones in length and width (which can be: 1, 2, 3, 4). Figure 2 shows an example of zones used in LTE networks. Essentially, an operator of a network can decide the optimal zoning parameter combination (L, W, Nx, Ny) based on, for example, cell size, UE environment, use cases etc.

It has been suggested to use the LTE zoning concept in NR networks to compress the location information of each UE. This results in reduced signalling overhead as UEs can exchange relative distance information by exchanging zone information in the sense of a few zone identifier bits. It is possible that in NR networks there will be the need to configure a finer zone-map for UEs within a large area covered by a cell. Further, in NR networks, zones can be used to control more procedures, which can benefit from finer understanding of UE location.

In NR networks supporting V2X signalling and vehicle UEs (VUEs), the following cases could be encountered.

Case 1 : one direction on a highway comprises several distinct lanes (e.g. 5 lanes of 3.5m in US) and movement towards/from a different lane is to be captured.

Case 2 : a highway comprise sections with and without a median strip, interchanged regularly along the highway and a zone map needs to be defined along a direction of movement of a VUE and along a direction opposite to the movement of the VUE.

Case 3 : the maximum speed of VUEs is highly variable, e.g. from 50 to 120 km/h which means up to 1m relative movement every 36ms or 15ms between vehicles in opposing directions respectively along a highway area that is covered by a cell. At the same time, typical vehicle stopping distances (=thinking+braking distance) for the aforementioned speeds are between 23m and 96m, respectively.

Case 4 : person UEs (PUEs) have significantly different speeds (and almost zero stopping distance) than VUEs (e.g. ~3km/h versus up to 50km/h) and the terain and road architecture within an urban environment can be very complex.

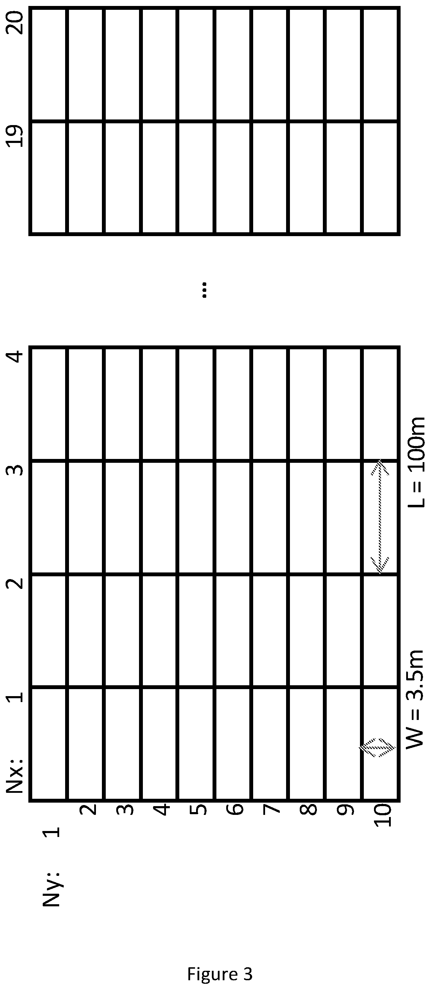

To capture and control effectively the possibly variable mobility of VUEs within a highway area and PUEs and VUEs in an urban environment, a finer zone-map may be required for UEs than that used in LTE networks. Figure 3 shows an example of a finer zone-map used for NR V2X networks.

The information transmitted from the transmit UE to the receive UE may comprise a current position of the transmit UE. The current position of the transmit UE may be used to define the transmit UE locality. Determining when the transmit UE locality coincides with the critical communication area of the receive UE may comprise determining when the current position of the transmit UE coincides with the critical communication area of the receive UE.

The information transmitted from the transmit UE to the receive UE may comprise a current geographical zone within which the transmit UE resides. The current geographical zone may be described by a current geographical zone identifier. The current geographical zone of the transmit UE may be used to define the transmit UE locality. The current geographical zone can provide crude location indication of the transmit UE to the receive UE.

Additionally or alternatively, the information transmitted from the transmit UE to the receive UE may comprise one or more projected geographical zones within which the transmit UE may reside within a next X ms or seconds. The one or more projected geographical zones may be described by one or more projected geographical zone identifiers. The one or more projected geographical zones of the transmit UE may be used to define the transmit UE locality.

The transmit UE may determine the one or more projected geographical zones by choosing one or more geographical zones around the transmit UE current zone. The one or more geographical zones around the transmit UE current zone may comprise a number of subzones in length (sub_Nx) and width (sub_Ny) of a zone map of the transmit UE.

The transmit UE may determine the one or more projected geographical zones by adopting a predicting method that takes into account the current state of the transmit UE and outputs one or more predicted projected geographical zones. The current state of the transmit UE may be determined using one or more of its current 2D position, velocity, direction, yaw axis, acceleration. The transmit UE can extract the one or more projected geographical zones from the one or more predicted projected geographical zones according to a highest percentage probability of the transmit UE being in a certain location.

The current geographical zone and/or the one or more projected geographical zones information can be helpful for the receive UE to understand relative movement between itself and the transmit UE.

Determining when the transmit UE locality coincides with the critical communication area of the receive UE may comprise determining when a current geographical zone of the transmit UE coincides with the critical communication area of the receive UE. Additionally or alternatively, determining when the transmit UE locality coincides with the critical communication area of the receive UE may comprise determining when one or more projected geographical zones of the transmit UE coincide with the critical communication area of the receive UE. The information transmitted from the transmit UE to the receive UE may comprise frequency of the one or more SL communications. The receive UE may use the frequency information to determine a Doppler shift in the SL communications and establish a relative distance between the transmit UE and the receive UE and a direction of movement of the transmit UE and determine whether the transmit UE locality coincides with the critical communication area of the receive UE. In the receive UE, by monitoring the change in frequency of SL communication signals (e.g reference symbols, for example DMRS of SCI) received from the transmit UE, the receive UE can extract how fast the transmit UE is approaching or moving away from it.

The information transmitted from the transmit UE to the receive UE may comprise a distance between the receive UE and the transmit UE. The receive UE may use the distance information to determine whether the transmit UE locality coincides with the critical communication area of the receive UE.

The information transmitted from the transmit UE to the receive UE may comprise any of a direction, a velocity, an acceleration, a yaw-axis of the transmit UE. The receive UE may use the information to determine whether the transmit UE locality coincides with the critical communication area of the receive UE.

The information transmitted from the transmit UE to the receive UE may comprise a reference signal received power (RSRP) of the one or more SL communications. The receive UE may use the RSRP information to establish a relative distance between the receive UE and the transmit UE and determine whether the transmit UE locality coincides with the critical communication area of the receive UE. Such a RSRP based approach could avoid the extra explicit indication from Tx-UE on information about its locality but one problem is that it has less reliability (translation to distance depends on channel i.e. LOS/NLOS).

The information transmitted from the transmit UE to the receive UE may be sent in a periodic manner or an aperiodic manner. Periodic transmission and/or aperiodic transmission may be a transmit UE behaviour that is enabled and disabled by the base station. For example, such behaviour could be configured and triggered for the transmit UE to provide an initial transmission of the information and periodic updates of the information to the receive UE. Updates could have a different form from the initial information transmission to reduce signalling overhead. For example, updates could consist of a few indication bits to denote changes to the initial information.

How often information on transmit UE locality will be required may depend on how dynamic the environment is and on definitions of geographical zones and critical communication area by, for example, the base station. The dynamic driving changes (speed, acceleration etc.) of the transmit UE should only affect the current zone identifier where the transmit UE resides. These location changes between zones could be larger than slot or ms-level changes. Furthermore, the critical communication area could be an even bigger region around the receive UE (covering several zones). So, it also may not change too fast according to receive UE driving parameters, but it will mainly depend on environment and relative distance and movement between the transmit UE and the receive UE. In general, feedback from the transmit UE shouldn't be oversignalled and the base station could ensure that a critical communication area is 'penetrated' at a second-level time scale. For example, in a highway scenario, a critical communication area could be configured to cover all lanes of a direction regarding width - so there is no need to reconfigure or redetermine the area when a UE changes lane - and could be as long as Y+M meters where Y regards stopping distances in the front and back of a UE (considering max possible speeds of the transmit UE and the receive UE) and M could be a additional margin distance decided by the base station.

The method may further comprise transmitting data determining a non-critical situation between the transmit UE and the receive UE to the receive UE. The receive UE may use the data determining a non-critical situation along with information transmitted from the transmit UE to the receive UE to establish the transmit UE locality. The method may further comprise transmitting data determining a critical situation between the transmit UE and the receive UE to the receive UE. The receive UE may use the data determining a critical situation along with information transmitted from the transmit UE to the receive UE to establish the transmit UE locality. The data determining a non-critical situation between the transmit UE and the receive UE and/or the data determining a critical situation between the transmit UE and the receive UE may comprise a direction of movement of the transmit UE with respect to the receive UE.

The direction of movement of the transmit UE with respect to the receive UE can be used with other information to establish whether or not there is a critical situation between the transmit UE and the receive UE. For example, when the UEs are VUEs, the direction of movement of the transmit UE with respect to the receive UE can be used with, for example, information on the environment of the transmit UE/receive UE to determine whether or not there is a collision situation between the UEs. For example, consider the scenario where several VUEs are grouped based on distance (e.g. around turning junctions or close to traffic lights or even in highways for car-to-car communication of critical messages). Different subsets of such VUEs may be in opposing lanes of traffic separated by a central reservation or in different lanes of the same traffic direction or just having a relative distance that is increasing. It would be inefficient to request HARQ feedback for message transmissions between such subsets of VUEs and disabling HARQ feedback for messages between such VUE subsets that are not in a critical situation with each other will bring benefits in terms of control overhead and throughput.

Compared to the approach where the transmit UE only shares distance related information with the receive UE (a.k.a. *distance-based approach*), the signalling with the critical communication area determination at the receive UE, can be the same (in the case of only location information being shared or when relative movement is implicitly extracted - e.g. from a Doppler shift) or increased (e.g. in the case of extra indication for transmit UE projected zone IDs). To compare the performance in terms of HARQ feedback overhead reduction, one could consider a simple highway scenario with total G' vehicles comprising a communication group and the same amount of cars in both directions, i.e. G'/2. Within a time period, K VUEs on average will disable HARQ feedback with the distance-based approach assuming a specific R radius criterion, leading to a (G-K) total feedback (where G depends on group size G'). With the CCA approach and the same R radius/length criteria, but only for vehicles in the same direction, K+L VUEs on average will disable HARQ feedback (where L is the number of UEs in the opposite direction within the radius R of the distance-based approach). The total HARQ feedback in that case is (G-K-L). So, based on group size, traffic density and radius criteria, one can roughly estimate the expected improvement. For example, for G=20, X=4, Y=8 (i.e. 10 UEs in each direction with 4 UEs in total outside the radius R), the improvement in total HARQ feedback is from 16 to 8 transmissions.

The information contained in the one or more SL communications received by the receive UE from the transmit UE may be contained in one or more fields of one or more control signal SL communications received by the receive UE from the transmit UE. The information contained in the one or more SL communications received by the receive UE from the transmit UE may be contained in one or more fields of one or more data signal SL communications received by the receive UE from the transmit UE.

The one or more sidelink communications from the transmit UE to the receive UE may be any of unicast communications, groupcast communications, broadcast communications.

The wireless communications network may comprise a LTE network. The wireless communications network may comprise a NR network. The wireless communications network may comprise a NR network supporting V2X. The receive UE and the transmit UE may be VUEs. The base station may be a gNB.

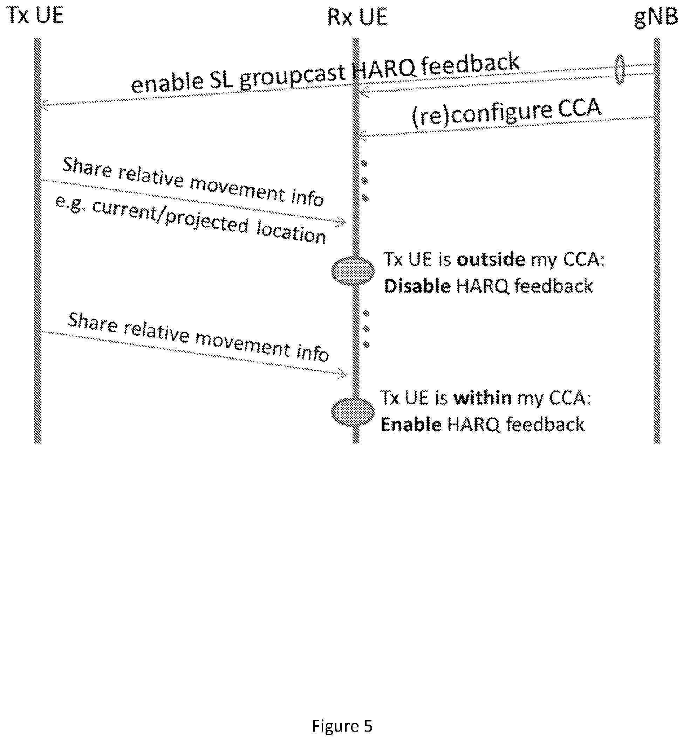

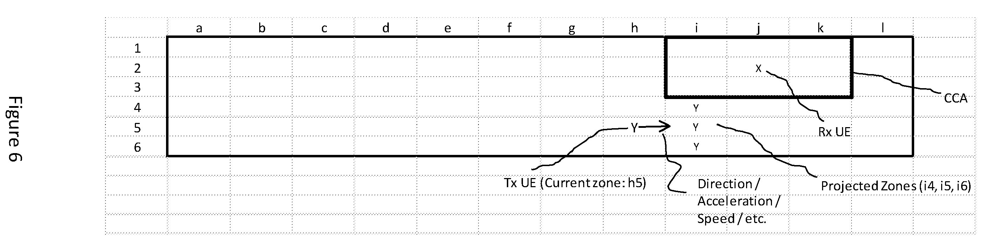

An embodiment of the method of controlling HARQ feedback in SL communications between the transmit (Tx) UE and the receive (Rx) UE when the critical communication area for the receive UE is configured by the base station is shown in Figure 5. Further details of using the critical communication area for the receive (Rx) UE and the transmit user equipment locality established using information from the transmit (Tx) UE to determine whether or not the transmit UE is within the critical communication area of the receive UE and enable/disable HARQ feedback from the receive UE is shown in Figure 6.

The proposed method takes into account the receive UE situation and its relative movement with respect to the transmit UE and results into more efficient operation to enable/disable HARQ feedback. Disabling unnecessary HARQ feedback 1) reduces the control overhead and 2) increases throughput in the network.

When the receive UE disables HARQ feedback the transmit UE should know not to expect HARQ feedback anymore. The transmit UE must be informed otherwise it could suppose that the SCI has not been decoded and initiate a retransmission of the respective data. One solution to this could be that the transmit UE understands ACK when nothing is received. In that case, the confusion caused if HARQ feedback is not received due to channel conditions (e.g. missed SCI) and not due to the operation of disabling HARQ feedback, can be resolved by higher layers.

An alternative proposal could be to split resource pools into two parts; one for transmission with HARQ and the other for transmission without HARQ. Configuration would be needed so as UEs are aware of such split, e.g. an ID that indicates if a resource pool is for HARQ enabled. Then, enabling / disabling the HARQ feedback can become just a matter of setting the border of the pools. A given VUE could use (or be prompted to use, by the base station) the appropriate pool based on the criticality of messages.

The non-transitory computer readable medium may comprise at least one from a group consisting of: a hard disk, a CD-ROM, an optical storage device, a magnetic storage device, a Read Only Memory, a Programmable Read Only Memory, an Erasable Programmable Read Only Memory, EPROM, an Electrically Erasable Programmable Read Only Memory and a Flash memory.

Although not shown in detail any of the devices or apparatus that form part of the network may include at least a processor, a storage unit and a communications interface, wherein the processor unit, storage unit, and communications interface are configured to perform the method of any aspect of the present invention. Further options and choices are described below.

The signal processing functionality of the embodiments of the invention especially the gNB and the UE may be achieved using computing systems or architectures known to those who are skilled in the relevant art. Computing systems such as, a desktop, laptop or notebook computer, hand-held computing device (PDA, cell phone, palmtop, etc.), mainframe, server, client, or any other type of special or general purpose computing device as may be desirable or appropriate for a given application or environment can be used. The computing system can include one or more processors which can be implemented using a general or special-purpose processing engine such as, for example, a microprocessor, microcontroller or other control module.

The computing system can also include a main memory, such as random access memory (RAM) or other dynamic memory, for storing information and instructions to be executed by a processor. Such a main memory also may be used for storing temporary variables or other intermediate information during execution of instructions to be executed by the processor. The computing system may likewise include a read only memory (ROM) or other static storage device for storing static information and instructions for a processor.

The computing system may also include an information storage system which may include, for example, a media drive and a removable storage interface. The media drive may include a drive or other mechanism to support fixed or removable storage media, such as a hard disk drive, a floppy disk drive, a magnetic tape drive, an optical disk drive, a compact disc (CD) or digital video drive (DVD) read or write drive (R or RW), or other removable or fixed media drive. Storage media may include, for example, a hard disk, floppy disk, magnetic tape, optical disk, CD or DVD, or other fixed or removable medium that is read by and written to by media drive. The storage media may include a computer-readable storage medium having particular computer software or data stored therein.

In alternative embodiments, an information storage system may include other similar components for allowing computer programs or other instructions or data to be loaded into the computing system. Such components may include, for example, a removable storage unit and an interface , such as a program cartridge and cartridge interface, a removable memory (for example, a flash memory or other removable memory module) and memory slot, and other removable storage units and interfaces that allow software and data to be transferred from the removable storage unit to computing system.

The computing system can also include a communications interface. Such a communications interface can be used to allow software and data to be transferred between a computing system and external devices. Examples of communications interfaces can include a modem, a network interface (such as an Ethernet or other NIC card), a communications port (such as for example, a universal serial bus (USB) port), a PCMCIA slot and card, etc. Software and data transferred via a communications interface are in the form of signals which can be electronic, electromagnetic, and optical or other signals capable of being received by a communications interface medium.

In this document, the terms 'computer program product', 'computer-readable medium' and the like may be used generally to refer to tangible media such as, for example, a memory, storage device, or storage unit. These and other forms of computer-readable media may store one or more instructions for use by the processor comprising the computer system to cause the processor to perform specified operations. Such instructions, generally 45 referred to as 'computer program code' (which may be grouped in the form of computer programs or other groupings), when executed, enable the computing system to perform functions of embodiments of the present invention. Note that the code may directly cause a processor to perform specified operations, be compiled to do so, and/or be combined with other software, hardware, and/or firmware elements (e.g., libraries for performing standard functions) to do so.

The non-transitory computer readable medium may comprise at least one from a group consisting of: a hard disk, a CD-ROM, an optical storage device, a magnetic storage device, a Read Only Memory, a Programmable Read Only Memory, an Erasable Programmable Read Only Memory, EPROM, an Electrically Erasable Programmable Read Only Memory and a Flash memory. In an embodiment where the elements are implemented using software, the software may be stored in a computer-readable medium and loaded into computing system using, for example, removable storage drive. A control module (in this example, software instructions or executable computer program code), when executed by the processor in the computer system, causes a processor to perform the functions of the invention as described herein.

Furthermore, the inventive concept can be applied to any circuit for performing signal processing functionality within a network element. It is further envisaged that, for example, a semiconductor manufacturer may employ the inventive concept in a design of a stand-alone device, such as a microcontroller of a digital signal processor (DSP), or application-specific integrated circuit (ASIC) and/or any other sub-system element.

It will be appreciated that, for clarity purposes, the above description has described embodiments of the invention with reference to a single processing logic. However, the inventive concept may equally be implemented by way of a plurality of different functional units and processors to provide the signal processing functionality. Thus, references to specific functional units are only to be seen as references to suitable means for providing the described functionality, rather than indicative of a strict logical or physical structure or organisation.

Aspects of the invention may be implemented in any suitable form including hardware, software, firmware or any combination of these. The invention may optionally be implemented, at least partly, as computer software running on one or more data processors and/or digital signal processors or configurable module components such as FPGA devices.

Thus, the elements and components of an embodiment of the invention may be physically, functionally and logically implemented in any suitable way. Indeed, the functionality may be implemented in a single unit, in a plurality of units or as part of other functional units. Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognise that various features of the described embodiments may be combined in accordance with the invention. In the claims, the term 'comprising' does not exclude the presence of other elements or steps.

Furthermore, although individually listed, a plurality of means, elements or method steps may be implemented by, for example, a single unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

Furthermore, the order of features in the claims does not imply any specific order in which the features must be performed and in particular the order of individual steps in a method claim does not imply that the steps must be performed in this order. Rather, the steps may be performed in any suitable order. In addition, singular references do not exclude a plurality. Thus, references to 'a', 'an', 'first', 'second', etc. do not preclude a plurality.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognise that various features of the described embodiments may be combined in accordance with the invention. In the claims, the term 'comprising' or "including" does not exclude the presence of other elements.

**Claims**

1. A method performed in a wireless communications network comprising at least one base station, at least one transmit user equipment, at least one receive user equipment and a sidelink between the transmit user equipment and the receive user equipment, the method comprising the steps of

defining one or more geographical zones around the at least one receive user equipment as a critical communication area for the at least one receive user equipment, wherein the one or more geographical zones comprise a current geographical zone within which the receive user equipment resides and one or more projected geographical zones within which the receive user equipment is projected to reside within a number of milliseconds;
using the sidelink to transmit information from the at least one transmit user equipment to the at least one receive user equipment through groupcast communication;
using the transmitted information to establish a transmit user equipment locality; determining when the transmit user equipment locality coincides with the critical communication area of the at least one receive user equipment; and
enabling hybrid automatic repeat request feedback from the receive user equipment if the transmit user equipment locality coincides with the critical communication area of the receive user equipment.

wherein the critical communication area of the receive user equipment is defined using one or more network conditions that are used to place one or more constraints on the critical communication area for the receive UE, and the one or more constraints comprise:
a minimum size of the critical communication area.

2. A method according to claim 1, wherein if hybrid automatic request feedback is enabled the receive user equipment transmits a HARQ-ACK feedback message as part of SFCI to the transmit user equipment on a PSFCH when the receive user equipment to indicate a successful reception or a HARQ-NACK feedback message as part of SFCI to the transmit user equipment on a PSFCH to indicate a failed reception.

3. A method according to claim 1, wherein the transmitted information from the transmit user equipment to the receive user equipment comprises a current geographical zone within which the transmit user equipment resides.

4. A method according to claim 3, wherein the current geographical zone is described by a current geographical zone identifier.

5. A method according to claim 4, wherein the current geographical zone identifier is specified according to the following equations:

$$x' = \text{Floor} (x / L) \text{ Mod } Nx;$$

$$y' = \text{Floor} (y / W) \text{ Mod } Ny;$$

$$\text{Zone\_id} = y' * Nx + x'$$

where x, y are the measured longitude and latitude of the transmit user equipment's location respectively, L and W are the length and width each zone, and Nx and Ny are the number of zones in the length and width, and Nx is greater than 4.

6. A method according to claim 5, wherein the current geographical zone comprises a finer zone-map for user equipments than that used in LTE networks, wherein in LTE networks Nx equals 4.

7. A method according to claim 5, wherein one or more conditions are used by the base station or the receive user equipment to define and/or adjust the critical communication area of the receive user equipment; the one or more conditions comprise one or more of:

a current state of the receive user equipment determined using one or more of a current position, velocity, direction, yaw axis, and acceleration of the receive user equipment; and
a current state of the transmit user equipment determined using one or more of a current position, velocity, direction, yaw axis, and acceleration of the transmit user equipment.

**Patentansprüche**

1. Verfahren, durchgeführt in einem drahtlosen Kommunikationsnetzwerk, umfassend mindestens eine Basisstation, mindestens ein sendendes Benutzergerät, mindestens ein empfangendes Benutzergerät und eine Sidelink zwischen dem sendenden Benutzergerät und dem empfangenden Benutzergerät, wobei das Verfahren die folgenden Schritte umfasst:

Definieren eines oder mehrerer geografischer Zonen um das mindestens eine empfangende Benutzergerät als ein kritisches Kommunikationsgebiet für das mindestens eine empfangende Benutzergerät, wobei die einen oder mehreren geografischen Zonen eine aktuelle geografische Zone, in der sich das empfangende Benutzergerät befindet, sowie eine oder mehrere prognostizierte geografische Zonen, in denen sich das empfangende Benutzergerät voraussichtlich innerhalb einer Anzahl von Millisekunden befinden wird, umfassen;

Verwenden der Sidelink zur Sendung von Informationen vom mindestens einen sendenden Benutzergerät an das mindestens eine empfangende Benutzergerät mittels Groupcast-Kommunikation;

Verwenden der gesendeten Informationen zum Etablieren einer Lokalität des sendenden Benutzergeräts;

Bestimmen, wann die Lokalität des sendenden Benutzergeräts mit dem kritischen Kommunikationsgebiet des mindestens einen empfangenden Benutzergeräts zusammenfällt; und

Aktivieren eines Hybrid Automatic Repeat Request (HARQ)-Feedbacks vom empfangenden Benutzergerät, wenn die Lokalität des sendenden Benutzergeräts mit dem kritischen Kommunikationsgebiet des empfangenden Benutzergeräts zusammenfällt;

wobei das kritische Kommunikationsgebiet des empfangenden Benutzergeräts unter Verwendung eines oder mehrerer Netzwerkbedingungen definiert ist, die zur Festlegung einer oder mehrerer Einschränkungen für das kritische Kommunikationsgebiet des empfangenden Benutzergeräts verwendet werden, und wobei die einen oder mehreren Einschränkungen eine Mindestgröße des kritischen Kommunikationsgebiets umfassen.

**2.** Verfahren nach Anspruch 1, wobei, wenn das Hybrid Automatic Repeat Request-Feedback aktiviert ist, das empfangende Benutzergerät eine HARQ-ACK-Feedbacknachricht als Teil von SFCI auf einem PSFCH an das sendende Benutzergerät sendet, um einen erfolgreichen Empfang anzuzeigen, oder eine HARQ-NACK-Feedbacknachricht als Teil von SFCI auf einem PSFCH an das sendende Benutzergerät sendet, um einen fehlgeschlagenen Empfang anzuzeigen.

**3.** Verfahren nach Anspruch 1, wobei die gesendeten Informationen vom sendenden Benutzergerät an das empfangende Benutzergerät eine aktuelle geografische Zone umfassen, in der sich das sendende Benutzergerät befindet.

**4.** Verfahren nach Anspruch 3, wobei die aktuelle geografische Zone durch eine Kennung der aktuellen geografischen Zone beschrieben ist.

**5.** Verfahren nach Anspruch 4, wobei die Kennung der aktuellen geografischen Zone gemäß den folgenden Gleichungen angegeben ist:

$$x' = \text{Floor } (x \text{ / L}) \text{ Mod Nx};$$

$$y' = \text{Floor } (y \text{ / W}) \text{ Mod Ny};$$

$$\text{Zone\_id} = y' * \text{Nx} + x'$$

wobei x und y jeweils die gemessene geographische Länge und Breite des Standorts des sendenden Benutzergeräts sind, L und W jeweils die Länge und Breite jeder Zone darstellen, und Nx und Ny die Anzahl der Zonen in der Länge und Breite darstellen, und wobei Nx größer als 4 ist.

**6.** Verfahren nach Anspruch 5, wobei die aktuelle geografische Zone eine feinere Zonenkarte für Benutzergeräte umfasst als jene, die in LTE-Netzen verwendet wird, wobei in LTE-Netzen Nx gleich 4 ist.

**7.** Verfahren nach Anspruch 5, wobei eine oder mehrere Bedingungen von der Basisstation oder dem empfangenden Benutzergerät verwendet werden, um das kritische Kommunikationsgebiet des empfangenden Benutzergeräts zu definieren und/oder anzupassen;

wobei die einen oder mehreren Bedingungen eines oder mehrere der folgenden Merkmale umfassen:

einen aktuellen Zustand des empfangenden Benutzergeräts, bestimmt unter Verwendung eines oder mehrerer der folgenden Merkmale: aktueller Position, Geschwindigkeit, Richtung, Gierachse und Beschleunigung des empfangenden Benutzergeräts; und

einen aktuellen Zustand des sendenden Benutzergeräts, bestimmt unter Verwendung eines oder mehrerer der folgenden Merkmale: aktueller Position, Geschwindigkeit, Richtung, Gierachse und Beschleunigung des sendenden Benutzergeräts.

**Revendications**

**1.** Procédé mis en œuvre dans un réseau de communications sans fil comprenant au moins une station de base, au moins un équipement utilisateur d'émission, au moins un équipement utilisateur de réception et une liaison latérale entre l'équipement utilisateur d'émission et l'équipement utilisateur de réception, le procédé comprenant les étapes consistant à

définir une ou plusieurs zones géographiques autour de l'au moins un équipement utilisateur de réception en tant que zone de communication critique pour l'au moins un équipement utilisateur de réception, dans lequel les une ou plusieurs zones géographiques comprennent une zone géographique courante au sein de laquelle l'équipement utilisateur de réception réside et une ou plusieurs zones géographiques projetées au sein desquelles l'équipement utilisateur de réception est censé résider dans un certain nombre de millisecondes ;

utiliser la liaison latérale pour transmettre des informations depuis l'au moins un équipement utilisateur d'émission vers l'au moins un équipement utilisateur de réception par le biais d'une communication de diffusion de groupe ;

utiliser les informations transmises pour établir une localité d'équipement utilisateur d'émission ;

déterminer quand la localité d'équipement utilisateur d'émission coïncide avec la zone de communication critique de l'au moins un équipement utilisateur de réception ; et

activer une rétroaction de demande de répétition automatique hybride à partir de l'équipement utilisateur de réception si la localité d'équipement utilisateur d'émission coïncide avec la zone de communication critique de l'équipement utilisateur de réception ;

dans lequel la zone de communication critique de l'équipement utilisateur de réception est définie à l'aide d'une ou plusieurs conditions de réseau qui sont utilisées pour placer une ou plusieurs contraintes sur la zone de communication critique pour l'UE de réception, et les une ou plusieurs contraintes comprennent :

une taille minimale de la zone de communication critique.

2. Procédé selon la revendication 1, dans lequel, si la rétroaction de demande automatique hybride est activée, l'équipement utilisateur de réception transmet un message de rétroaction HARQ-ACK en tant que partie de SFCI à l'équipement utilisateur d'émission sur un PSFCH lorsque l'équipement utilisateur de réception indique une réception réussie ou un message de rétroaction HARQ-NACK en tant que partie de SFCI à l'équipement utilisateur d'émission sur un PSFCH pour indiquer une réception échouée.

3. Procédé selon la revendication 1, dans lequel les informations transmises depuis l'équipement utilisateur d'émission vers l'équipement utilisateur de réception comprennent une zone géographique courante au sein de laquelle réside l'équipement utilisateur d'émission.

4. Procédé selon la revendication 3, dans lequel la zone géographique courante est décrite par un identificateur de zone géographique courante.

5. Procédé selon la revendication 4, dans lequel l'identificateur de zone géographique courante est spécifié selon les équations suivantes :

$$x' = \text{partie entière } (x / L) \text{ Mod } Nx \text{ ;}$$

$$y' = \text{partie entière } (y / W) \text{ Mod } Ny \text{ ;}$$

$$\text{Zone\_id} = y' * Nx + x'$$

où x, y sont respectivement la longitude et la latitude mesurées de l'emplacement de l'équipement utilisateur d'émission, L et W sont la longueur et la largeur de chaque zone, et Nx et Ny sont le nombre de zones dans la longueur et la largeur, et Nx est supérieur à 4.

6. Procédé selon la revendication 5, dans lequel la zone géographique courante comprend une carte de zone plus fine pour des équipements utilisateur que celle utilisée dans des réseaux LTE, dans lequel, dans des réseaux LTE, Nx est égal à 4.

7. Procédé selon la revendication 5, dans lequel une ou plusieurs conditions sont utilisées par la station de base ou l'équipement utilisateur de réception pour définir et/ou ajuster la zone de communication critique de l'équipement utilisateur de réception ;

les une ou plusieurs conditions comprennent un ou plusieurs des états suivants :

un état courant de l'équipement utilisateur de réception déterminé à l'aide d'un ou plusieurs paramètres parmi la position, la vitesse, la direction, l'axe de lacet, et l'accélération courants de l'équipement utilisateur de réception ; et

un état courant de l'équipement utilisateur d'émission déterminé à l'aide d'un ou plusieurs paramètres parmi la position, la vitesse, la direction, l'axe de lacet, et l'accélération courants de l'équipement utilisateur d'émission.

Core Network

S1

S1

RAN

S1

X2

X2

X2

Figure 1

Nx:     1       2       3       4

Ny:

1

W = 50m

2

L = 50m

3

4

Figure 2

Figure 3

Time:C

Vehicle

CCA

Time:C + 5 seconds

roundabout

Same direction highway

Figure 4

Figure 5

CCA

Rx UE

Projected Zones (i4, i5, i6)

Direction /
Acceleration /
Speed / etc.

Tx UE (Current zone: h5)

X

Y

Y

Y

Y

a b c d e f g h i j k l

1
2
3
4
5
6

Figure 6